# EUROPEAN PATENT SPECIFICATION

(11) **EP 2 897 854 B1**
(45) Date of publication and mention of the grant of the patent: **18.10.2017**
(21) Application number: 12767076.8
(22) Date of filing: 20.09.2012
(51) Int. Cl.: B62K 3/00, B62K 3/14, B62K 7/04, B62K 13/08, B62K 17/00, B62K 27/02, B62K 27/12, B62K 27/00

(54) **CYCLE TRANSPORT SYSTEM**
RADTRANSPORTSYSTEM
SYSTÈME DE TRANSPORT PAR CYCLE

(43) Date of publication of application: 29.07.2015
(73) Proprietor: Ejizu, Ezekiel George, West Bromwich B71 1QD (GB)
(72) Inventor: Ejizu, Ezekiel George, West Bromwich B71 1QD (GB)
(74) Representative: Tart, Keith Raymond
(86) International application number: PCT/GB2012/000731
(87) International publication number: WO 2014/044994

(56) References cited:
- WO-A2-2009/131421
- CH-A- 108 628
- DE-A1- 3 332 539
- GB-A- 2 489 476
- US-A1- 2008 296 862

## Description

### Technical Field

The present invention relates to a motorised cycle or pedal cycle for two persons having either one or two rear wheels and, optionally to a trailer adapted for connection to the rear end thereof.

### Background Art

In economically underdeveloped or Third World countries there is a frequent requirement to transport people and goods relatively long distances over often rough roads or ground, especially in poorly developed areas and agricultural regions. Bicycles are often used in such circumstances; sometimes taking the form of two-person (tandem) cycles. However, conventional bicycles cope poorly in wet and sandy soil conditions and are not well suited in any event for towing trailers.

In such areas, single-person bicycles are sometimes converted into pedal powered motors/generators; for example, by removing a rear wheel and fitting a chain drive so that a drive shaft can be turned. However, the power that can be generated by one person in such a way is quite limited.

### Disclosure of Invention

The present invention seeks to overcome these problems by providing an improved pedal-powered vehicle that is especially suited to traversing rough, wet and sandy ground. Another aim of the invention is to provide a two-person vehicle, where a front rider steers the vehicle and a rear rider sits in a position that allows considerable pedal power to be exerted. The vehicle of the invention may include a detachable trailer that can be loaded with goods or supplies and which also is adapted to traverse un-tarmaced (unsurfaced) roads and paths. A preferred embodiment of the present invention also advantageously provides a vehicle with a trailer portion where the vehicle may be readily converted to a more socially acceptable tandem tricycle; in this form the vehicle provides transport means better suited for recreational purposes; typically in the evening and at weekends. The present invention also provides a vehicle that can be adapted to become a static pedal-powered machine; advantageously powered by two persons.

The invention comprises a vehicle having a frame, a front wheel and at least one rear wheel; and directly or indirectly attached to said frame, a front seat that faces forwards allowing a first rider to sit thereon and to steer the vehicle as it moves forward; and a rear seat that faces backwards such that in normal use a second rider can sit on said rear seat in a generally back-to-back position relative to a said first rider; further comprising a rear rider crank assembly and a front rider crank assembly; a wheel hub and a connected rear sprocket, or sprocket bush and a connected rear sprocket, are rotatably mounted around the crankshaft of said rear crank assembly such that in use pedal power from a rear rider is first transmitted through the rear pedals and rear crank assembly, via a cross-over drive chain, to said front rider crank assembly.

Preferably, in use pedal power is transmitted from said front rider crank assembly to said rear sprocket by a single drive chain.

The wheel hub or sprocket bush may be indirectly connected to said rear sprocket by a connecting sleeve attached to said rear sprocket and configured to engage the inside of the wheel hub or sprocket bush.

Preferably, the rear seat is located between the front wheel and the rear wheel and the rear seat further comprises a backrest/support a major portion of which is located at a level lower than the front seat.

The invention may comprise cycle as described above and a trailer that in use may be attached to the rear of said cycle. Preferably, following detachment of said rear wheel/wheels, the rear of the cycle may be directly or indirectly connected to the front of the trailer such that the cycle to may pivot relative to the trailer. Alternatively, in use following detachment of said rear wheel/wheels, the rear of the cycle may be directly or indirectly connected to the front of the trailer such that the cycle may pivot about the longitudinal axis of said axle of the trailer. Preferably, the trailer comprises a pair of front wheels located on a front axle and a pair of rear wheels mounted on a rear axle. The front and rear wheels on a first side of the trailer may be connected by a continuous track and the front and rear wheels on the other (second) side of the trailer are also connected by a continuous track.

The invention may comprise a cycle as described above and a trailer wherein in use the trailer may be connected to the rear portion of said frame following detachment of said rear wheel. Following detachment of said rear wheel and the hub thereof they are replaced by a sprocket bush having a rear sprocket. Preferably, the wheel stays of such a cycle and trailer are connected to the trailer etc. via one or more connecting member(s). Preferably, in use the connecting member(s) is pivotally mounted to the front axle of the trailer and locked to the cycle wheel stays by a tubular member(s) connected to a trailer handle. Preferably, the tubular member is "U-shaped" and the open ends engage an open tubular portion(s) of the connecting member and an open tubular portion(s) of a cycle wheel stay. The cycle and trailer may comprise two wheel stays pivotally mounted to the rear portion of cycle frame so as to facilitate removal of the cycle rear wheel prior to connecting a trailer or other equipment; such as a drive shaft via a suitable drive chain etc.

Preferably, the cycle or cycle and trailer comprises a cycle frame having at least one pivotally mounted sidebar that in use the rear cyclist/rider may hold.

The vehicle may comprise a bicycle; a tricycle or a bicycle-trailer hybrid.

### Brief Description of Drawings

The following diagrammatic figures illustrate two embodiments of the present invention;
Figure 1 shows a perspective view of a cycle according to the present invention that has a single rear wheel;
Figure 2 shows a side elevation of the cycle shown in Figure 1 with a front rider and a rear rider shown in dashed outline;
Figure 3 shows a perspective view of the cycle of Figure 1, except with sidebars raised, during removal of the rear wheel;
Figure 4a shows the pedal, sprocket and chain system used in the cycle shown in Figure 1; and Figure 4b shows how the rear wheel hub engages the wheel drive sprocket;
Figure 5 shows an enlarged gear drive used, instead of a wheel hub, when a trailer is attached to cycle shown in Figure 1;
Figures 6 shows an alternative (to Figure 4a) pedal, and sprocket system used in the cycle shown in Figure 1, and Figure 7 shows an alternative (to Figure 5) gear drive used when a trailer is attached;
Figure 8a shows a perspective view of the topside of a trailer adapted for attachment to the cycle of Figure 1, and Figure 8b shows a corresponding underside view;
Figure 9 shows a perspective view of the trailer of Figure 8 attached to the adapted cycle of Figure 1;
Figure 10 shows how the cycle and trailer are connected using a U-shaped member;
Figure 11 shows a side view of the cycle of Figure 1 in its adapted form connected to the trailer of Figure 8, going up an incline;
Figure 12 shows a perspective view of a cycle (tricycle) according to a second embodiment of the invention that has a pair of rear wheels;
Figure 13 shows a side elevation of the tricycle shown in Figure 12 with a front and rear rider shown in dashed outline;
Figure 14a shows a perspective view of the topside of a trailer adapted for attachment to the tricycle of Figure 12, and Figure 14b shows a corresponding underside view;
Figure 15 shows a perspective view of the trailer of Figure 14 attached to the tricycle of Figure 12; and
Figure 16 shows a side elevation of the tricycle of Figure 12 and the connected trailer of Figure 14 going up an incline.

### Description of Preferred Embodiments

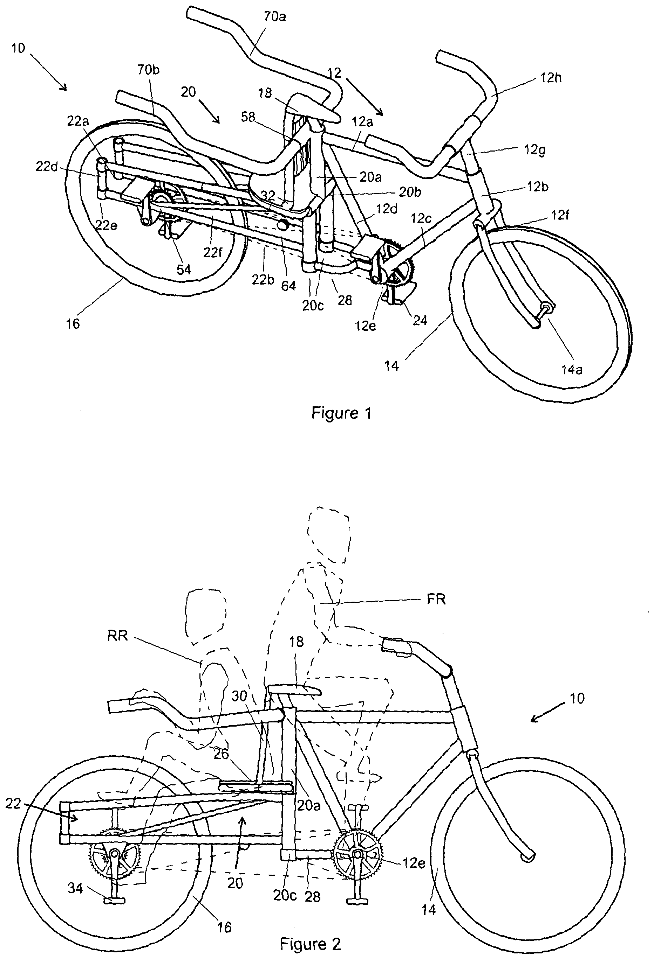

Figures 1-11 diagrammatically illustrate a first embodiment of a transport system according to the present invention. Figure 1 shows a perspective view of a tandem bicycle according to the invention and Figure 2 shows a side elevation of the cycle shown in Figure 1.

The cycle (10) comprises a frame (12); a conventional front wheel (14) with a wheel hub and bearing (14a) and spokes (not shown); and a single rear wheel (16) also with a hub/bearing and spokes (not shown). The front portion of the frame (12) is approximately triangular in configuration and comprises a top tube (12a); a head tube (12b); a down tube (12c) and a seat tube (12d) with a crankcase (12e) at its lower extremity that houses a crankshaft connected to a pair of crank-arms and front pedals (24). The head tube (12b) houses a conventional front fork member (12f) to which the front wheel hub/bearing (14a) is fixed; the upper part of said fork (12f) is connected via a headset (12g) to conventional front handlebars (12h). A front seat (18) is connected to the seat tube (12d) as in a conventional bicycle.

The rear portion of the frame (12) comprises a rear seat support assembly (20) and a pair of rear wheel stays (22). The rear seat support assembly (20) has an inverted "T shaped" portion comprising an upper vertical tube (20a) and a horizontal rear seat support tube (20b). The top end of the vertical tube (20a) is connected to the junction of the top tube (12a) and seat tube (12d). The lower end of the vertical tube (20a) is connected to the horizontal seat tube (20b). The seat support tube (20b) may be generally "D-shaped" (in plan view) in order to facilitate support of a rear seat (26). Two mounting tubes (20c end only shown) extend vertically downward from beneath the horizontal seat tube (20b). The pair of rear wheel stays (22) are pivotally mounted to these mounting tubes (20c). The combination of the vertical tube (20a), the seat support tube (20b) and the mounting tubes (20c) provide a support assembly (20) that is generally of "wishbone" shape. The lower ends of the mounting tubes (20c) are also connected to the crankcase (12e) by a further wishbone shaped member (28).

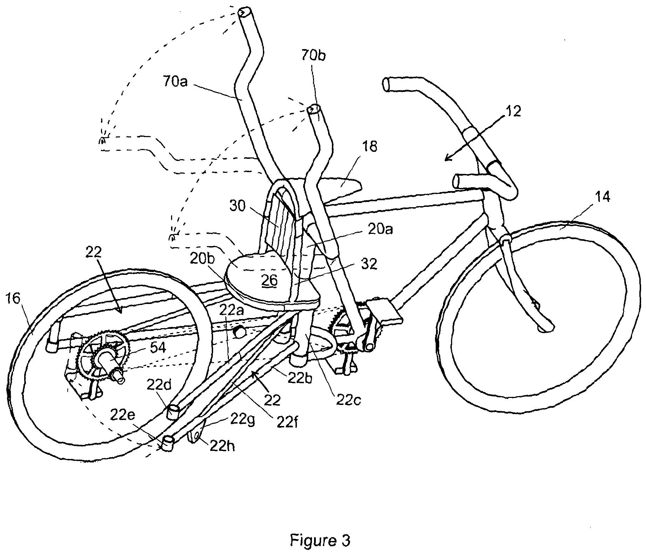

The wheel stays (22) pivot outwardly to facilitate removal of the rear wheel (16) as shown in Figure 3. Each rear wheel stay comprises an upper arm (22a) a lower arm (22b) connected at a first end to an outer pivot tube (22c) that may pivot about a mounting tube (20c). The second end of the upper and lower arms each have an open vertical tubular portion (22d, 22e) optionally used to connect a detachable trailer (see below). Each rear wheel stay also has a strengthening cross stay (22f) and a rear wheel mounting plate (22g) with a circular aperture (22h).

The rear seat (26) is located at a lower level than the front seat (18). This allows a rear seat backrest (30) to be located (at least in part) below the front seat (18) and to be supported by an inverted "U-shaped" tubular frame (32) connected to the "D-shaped" seat support tube (20b). Alternatively, the seat backrest (30) may be connected to and supported by the vertical tube (20a) portion of the support assembly (20).

The front seat (18) serves to allow a front rider (FR) to sit thereon facing in a forward direction (see Figure 2) so that the rider can steer and pedal the cycle (10) in the normal way. The rear seat (26, 32) serves to allow a rear rider (RR) to sit generally "back-to back" or "shoulders-to-back" with a front rider (FR) the rear rider so facing in a backward direction. The low rear seat combined with the backrest allow a rear rider (RR) to sit comfortably therein and advantageously to exert considerable force upon rear pedals (34) thereby allowing greater motive power to be generated. This is particularly important where the vehicle is being used to pull a trailer and/or to traverse rough terrain. The cycle has at least one pivotally mounted sidebar (70) that may be raised and lowered provided for the rear cyclist/rider to rest an arm upon or to hand-hold. Figure 3 shows how a pair of sidebars (70a, 70b) are pivotally connected (58) to the vertical tube (20a). These sidebars greatly reduce the likelihood of a rear rider falling off the rear seat (26) when riding the cycle/vehicle.

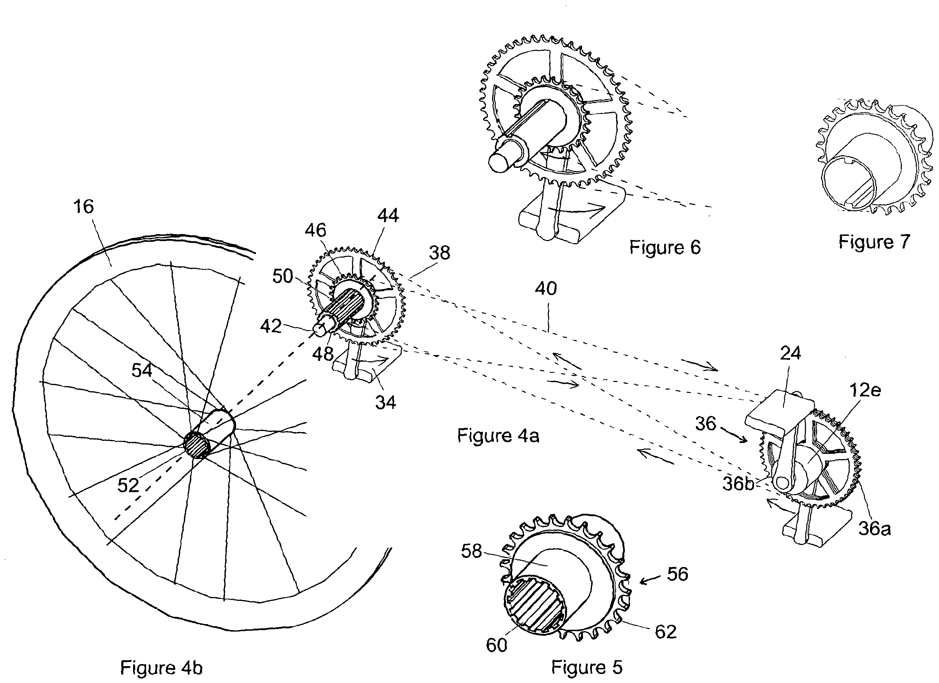

Figure 4a shows the front crankshaft (12e), crank-arms and pedals (24) and also the general arrangement of the front gear sprockets (36a, 36b), an outer (crossed) drive chain (38) and a conventional inner drive chain (40), rear gear sprockets (44, 46), rear crankshaft (42), one crank- arm and one rear pedal (34). The front crankshaft has a front outer gear sprocket wheel (36a) and a connected inner front gear sprocket wheel (36b) that mesh with the outer drive chain (38) and inner drive chain (40) respectively. The rear wheel axle (42) is rotationally mounted in apertures (22h) and is directly connected to a rear outer gear sprocket (44) that meshes with the outer drive chain (38). An inner rear gear sprocket (46) and a connected sleeve (48) are rotatably mounted on the rear wheel axle (42). The outer surface of the sleeve (48) has a (male) mesh or the like (50) configured to engage a corresponding (female) mesh (52) inside the hub (54) of the rear wheel. Optionally, there may be a conventional freewheel mechanism (not shown) between the inner rear gear sprocket (46) and the sleeve (48); in which event they will not be directly connected. Such a freewheel mechanism advantageously allows the riders to refrain from pedalling the vehicle; for example, when it is slowing down or at times when it is travelling downhill.

In use pedal power provided by a front rider (FR) is transmitted (see Figure 4a) via the front pedals (24) and crank members to the inner front sprocket wheel (36b) and through the inner drive chain (40) to the sleeve (48) and thence to the rear wheel hub (54) via the male-female mesh arrangement. Pedal power from a rear rider (RR) is first transmitted via the rear pedals (34) and crank members to the outer rear sprocket (44) through the outer drive chain (38) to the outer front sprocket wheel (36a) and thence to the connected inner front sprocket wheel (36b) and via the outer sprocket wheel (36a) to the rear wheel hub (as described above). Optionally, there may be a freewheel mechanism (not shown) between the front pedal crank and the front sprocket wheels (36a, 36b); thus allowing the front rider to refrain from pedalling whilst concentrating on steering, whilst still allowing the rear rider to provide pedal power to the vehicle.

It will be appreciated that owing to the back-to-back seating arrangement that the front pedals (24) will be pedalled in the opposite direction to the rear pedals (34). For this reason the outer drive chain (38) follows has a cross over (figure-eight) arrangement. This ensures that when the vehicle is being pedal powered by two riders that they do not oppose one-another; but rather that their power are combined and transferred to the rear wheel via the inner drive chain (40). A chain guide (64), mounted (see Figure 1) to one of the lower arm stays (22b), is provided proximal the crossover point of outer drive chain (38) to prevent wear by frictional contact that would otherwise occur at this point.

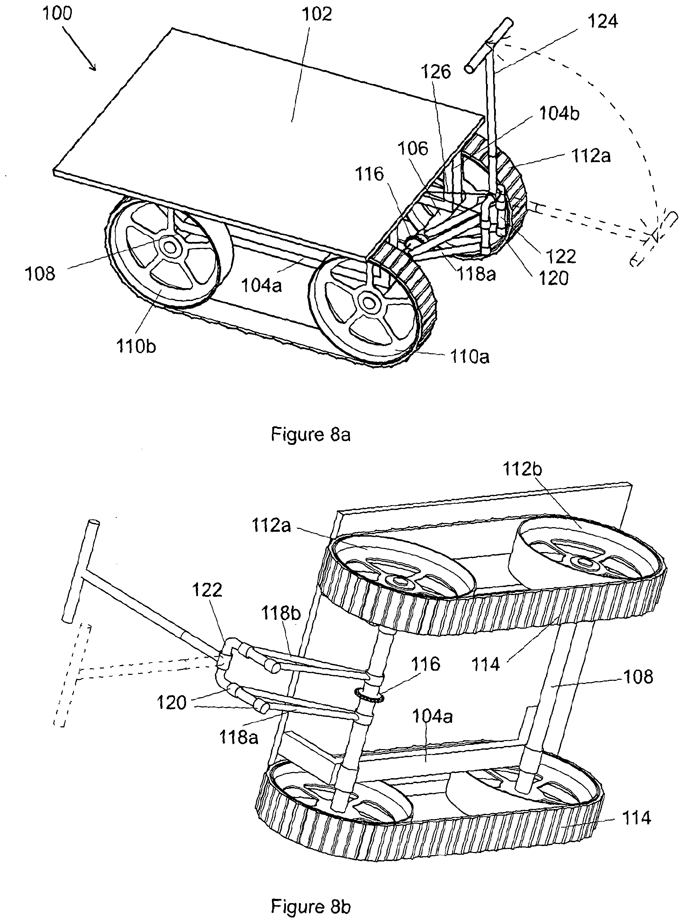

The cycle described above is especially adapted to readily allow the rear wheel (16) to be detached and replaced by a trailer (100) that has two pairs of wheels connected by continuous tracks (see Figures 8a and 8b). The trailer (100) comprises a rectangular shaped load bearing surface (102) supported by a pair of generally rectangular shaped axle frames (104a, 104b) located underneath each side of the surface (102); inset somewhat from the side edge to allow space for continuous tracks (114 - see below). A front axle (106) and a rear axle (108) are supported by the axle frames (104a. 104b). Four wheels are rotationally mounted at the ends of the axles (106, 108). A first pair of wheels (110a, 110b) are located under one side edge of the load bearing surface and a second pair of wheels (112a, 112b) are located under the opposite side edge. These wheels (110, 112) are relatively wide and present a cylindrical outer surface that has protrusions spaced around thereof (not shown) so that optionally the pair of wheels on each side of the trailer each engage/grip a continuous and flexible track (114).

The front axle (106) has a drive sprocket wheel (116) fixed around the centre; provided to allow a drive chain (see latter) from the cycle (10). A pair of "V-shaped" brackets (118a, 118b) are each pivotally mounted (each side of sprocket 116) at a first end to the front axle (106); and the second ends of each bracket have angled open tubular portions (120) configured to accept an inverted "U-shaped" tubular member (122) that has a "T-shaped" handle (124) pivotally attached to the upper centre portion thereof. When the trailer (100) is being used alone these members (122, 124), and the handle in particular, are used to pull the trailer over the ground; the ends of the U-shaped member (122) being engaged within the four open angled tubular portions (120) of the "V-shaped" brackets. Optionally, a stay (126) is provided (see Figure 8a) to prevent movement of the "V-shaped" brackets (118) relative to the trolley chassis or load bearing surface (102). The stay (126) provides a rigid connection between the trolley chassis (104) or load bearing surface (102) and the "V-shaped" brackets (118) or the trolley handle (124). The stay (126) is preferably detachable and is only required when the trolley is being used without the cycle (10).

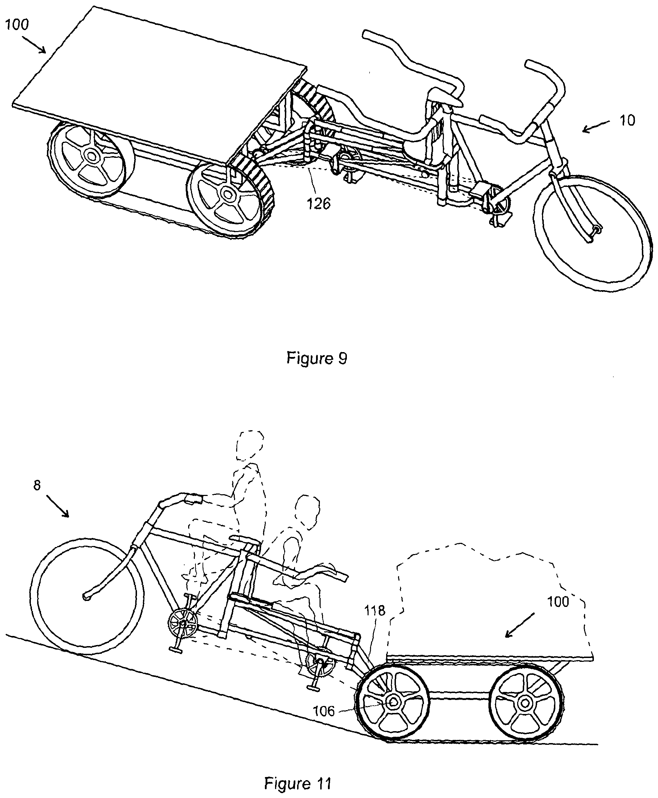

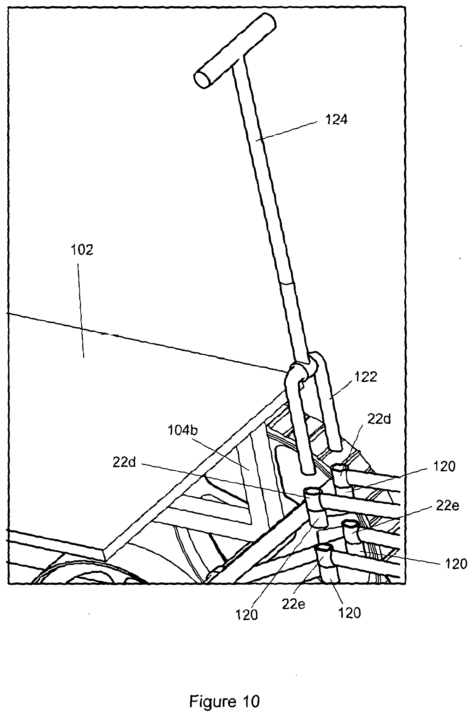

Figure 9 shows a perspective view of the trailer (100) attached to the cycle (10) and Figure 10 illustrates a partial perspective view of the front of the trailer (100) and the rear of the cycle (10) and shows the handle (124) with its pivotally connected "U-shaped" member (122) being pushed through the four open angled tubular portions (120) of the trailer that are aligned with open vertical tubular portions (22d, 22e) of the cycle; thereby connecting the cycle and the trailer. The handle portion (124) is preferably pivoted to a horizontal position before making this connection; this allows the free end of the handle (124) to be held under the cycle rear seat (26) by a clip or the like (not shown).

Prior to connecting the cycle (10) to the trailer (100) it is necessary to remove the rear wheel (16) of the cycle. Figure 3 illustrates this step. The rear pedals (34) and connected crank-arms are detached from the crankshaft (42) which is then unbolted from the wheel stays (22). This allows the wheel stays (22) to be pivoted apart (as shown) and the hub (54) of the rear wheel (16) to be detached from the sleeve (48). The wheel and hub are then replaced by a sprocket bush (56); illustrated in Figure 5. The sprocket bush comprises a sprocket (62) mounted on a bush (58) that has (an internal) female mesh (60) that engages a corresponding male mesh (50) on the surface of the outer sleeve (48 - that is connected to inner rear gear sprocket). A drive chain (128) is then fixed around the trailer axle drive sprocket (116) and around the bush sprocket (62); the wheel stays are pivoted to allow the axle (2) to be bolted (re-attached) thereto; and the crank-arms and pedals (34) are re-attached. Pedal power can now be transmitted from riders (FR, RR) via rear axle (42) of the cycle (as described above); bush sprocket (62); drive chain (128); trailer axle sprocket (116) and trailer axle (106) to the front pair of trailer wheels (110a, 112a). It will be noted that the configuration of the "V-shaped" brackets (118) and the inverted "U-shaped" member (122) allow the drive chain (128) unimpeded access as it moves to drive the trailer drive sprocket and connected axle (116, 106).

Figure 11 shows a side view of the cycle (10) connected to the trailer (100). It will be noted that the pivotal attachment of the "V-shaped" shaped brackets (118a, 118b) allows the trailer (100) to pivot (about the front axle 106 of the trailer) relative to the cycle portion (8). This allows the vehicle to more easily traverse ramps, bumpy ground, etc.

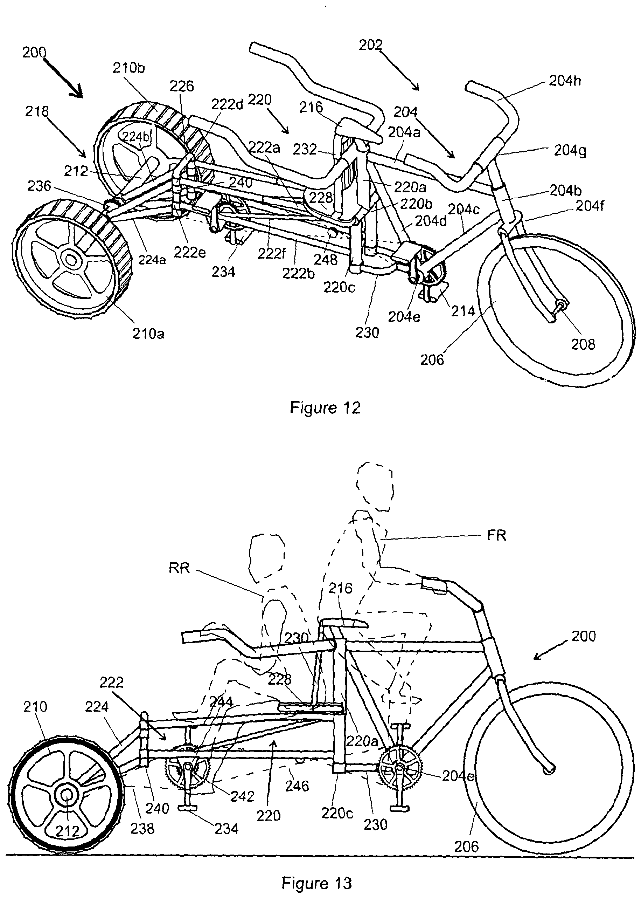

Figures 12-16 diagrammatically illustrate a second embodiment of a transport system according to the present invention. Figure 12 shows a perspective view of a tandem tricycle, and Figure 13 shows a side elevation of the tricycle shown in Figure 12.

The cycle (200) has a front portion (202) comprising; frame (204) and a conventional front wheel (206) with a hub/bearing (208) and spokes (not shown); and a two rear wheels (210a, 210b) mounted on an axle (212). The front part of the frame (204) is approximately triangular in configuration and comprises a top tube (204a); a head tube (204b); a down tube (204c) and a seat tube (204d) with a crankcase (204e) at its lower extremity that houses a crankshaft connected to a pair crank-arms and front pedals (214). The head tube (204b) houses a conventional front fork member (204f) to which the front wheel hub/bearing (208) is fixed; the upper part of said fork (204f) is connected via a headset (204g) to conventional front handlebars (204h). A front seat (216) is connected to the seat tube (204d) as in a conventional bicycle.

The rear portion of the cycle (218) comprises a rear seat support assembly (220) and a pair of rear wheels (210a, 210b) attached to a rear axle (212); the rear axle being rotationally mounted on a pair of "V-shaped" bracket member (224a, 224b) each separately connected to one of a pair of wheel stays (222) by a "U-shaped" tube (226). The rear seat support assembly (220) has an inverted "T-shaped" portion comprising an upper vertical tube (220a) and a horizontal rear seat support tube (220b). The top end of the vertical tube (220a) is connected to the junction of the top tube (204a) and seat tube (204d). The lower end of the vertical tube (220a) is connected to the horizontal seat tube (220b). The seat support tube (220b) may be generally "D-shaped" (in plan view) in order to facilitate support of a rear seat (228). Two tubes (220c) extend vertically downward from beneath the horizontal seat tube (220b). The wheel stays (222) are attached to these tubes (220c). The combination of the vertical tube (220a), the seat support tube (220b) and the tubes (220c) provide a support assembly (220) that is generally of "wishbone" shape. The lower ends of the tubes (220c) are also connected to the crankcase (204e) by a further wishbone shaped member (230).

The rear seat (228) is located at a lower level than the front seat (216). This allows a rear seat backrest (230) to be located below the front seat (216) and to be supported by an inverted "U-shaped" tubular frame (232) connected to the "D-shaped" seat support tube (220b). Alternatively, the seat backrest (230) may be connected to and supported by the vertical tube (220a) portion of the support assembly (220).

The front seat (216) serves to allow a front rider (FR) to sit thereon facing in a forward direction so that the rider can steer and pedal the cycle (200) in the normal way. The rear seat (228) serves to allow a rear rider (RR) to sit generally "back-to back" or "shoulders-to-back" with a front rider (FR) the rear rider so facing in a backward direction. The low rear seat combined with the backrest allow a second rider (RR) to sit comfortably therein and advantageously to exert considerable force upon rear pedals (234) thereby allowing greater motive power to be generated. This is particularly important where the vehicle is being used to pull a trailer and/or to traverse rough terrain.

Each rear wheel stay (222) comprises an upper arm (222a) and a lower arm (222b) both connected at a first end to the tube (220c). The second end of the upper and lower arms each have an open vertical tubular portion (222d, 222e) used to connect the wheel stays (222) to the rear wheel axle and wheel assembly (210, 212, 236 - see below). Each rear wheel stay also has a strengthening cross stay (222f).

The rear axle of the cycle (212 - see Figure 12) has a drive sprocket wheel (236) fixed around the centre; provided to engage a drive chain (238 - see below). A pair of "V-shaped" brackets (224a, 224b) are rotationally mounted (each side of sprocket 236) at a first end to the rear axle (212); and the second ends of each bracket have angled open tubular portions (240) configured to accept an inverted "U-shaped" tubular member (226); the ends of the U-shaped member (226) being engaged within the four open angled tubular portions (240) of the "V-shaped" brackets (224).

A crankcase (242) is attached between mounting plates (244) located near the rear end of each rear wheel stay lower arm (222b); and this crankcase houses a crankshaft connected to a pair of crank-arms and rear pedals (234). The front pedal crankshaft and the rear pedal crankshaft each have a drive sprocket wheel; these being connected by a "figure eight" configured drive chain (246). A chain guide (248), mounted (see Figure 12) to one of the lower arm stays (222b), is provided proximal the crossover point of outer drive chain (246) to prevent wear by frictional contact that would otherwise occur at this point. The rear pedal crankshaft also has second sprocket wheel mechanically connected to the rear axle sprocket (236) by a further "figure eight" configured drive chain (238). It will be noted that the configuration of the "V-shaped" brackets (224) and the inverted "U-shaped" member (226) allow the drive chain (238) unimpeded access as it moves to drive the rear wheel drive sprocket (236) and connected axle (212).

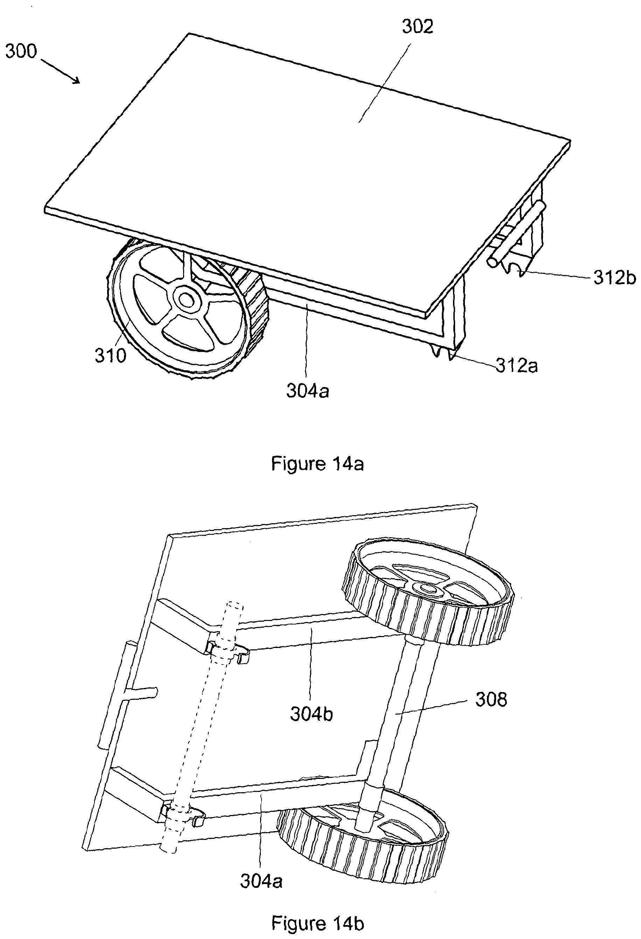

The cycle described above is especially adapted to readily allow the attachment of a trailer (see Figures 14a and 14b). The trailer (300) comprises a rectangular shaped load bearing surface (302) supported by a pair of generally rectangular shaped axle frames (304a, 304b) located underneath each side of the surface (302); inset somewhat from the side edge to (optionally) allow space for continuous tracks (not shown). A rear axle (308) is supported by the axle frames (304a. 304b). Two wheels (310) are rotationally mounted at the ends this axle (308). These wheels (310) are relatively wide and present a cylindrical outer surface that has protrusions spaced around thereof so that (optionally) in use a pair of wheels on each side of the trailer (see below) each engage/grip a continuous track. At the front end of each axle frame is an axle clip (312a, 312b - shown schematically). When it is desired to attach the trailer (300) to the cycle (200) these clips (312) are placed over the cycle rear axle (212) of the cycle and locked into place. The clips (312) are configured so that the trailer (300) can pivot about the longitudinal axis of the rear axle (212). This allows the vehicle (200, 300) to more readily traverse inclines and bumpy ground.

Pedal power can be transmitted from the front rider (FR) via front pedal axle, sprocket, and "figure-eight" chain (246) to the rear rider (RR) pedal axle (242) and thence via the second "figure-eight" chain (238) and rear axle sprocket (236) to the rear axle (212) and wheels (210).

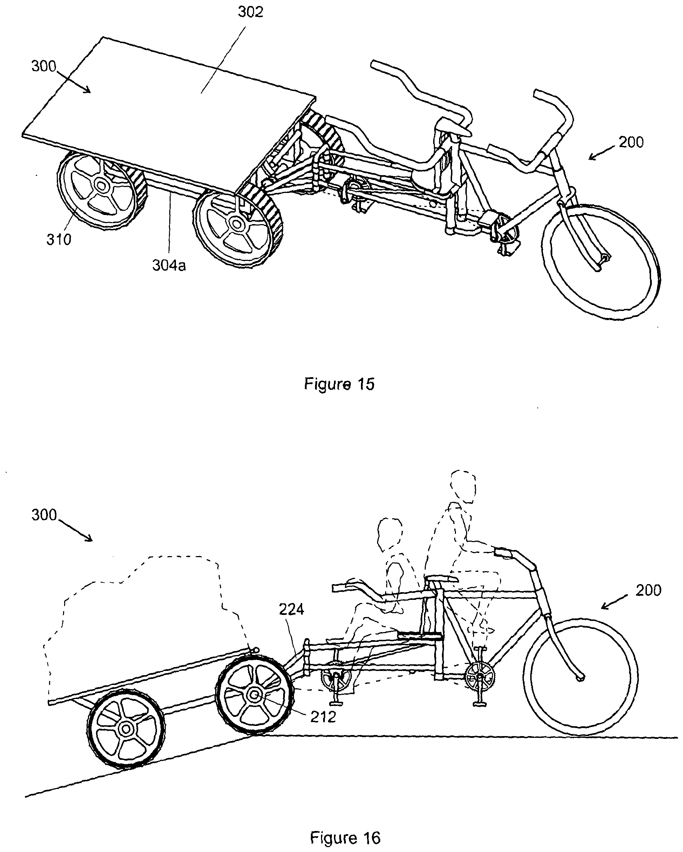

Figure 15 shows a perspective view of the trailer (300) attached to the cycle (200). Figure 16 shows a corresponding side view. It will be noted that the pivotal attachment of the "V-shaped" brackets (224a, 224b) allow the trailer (300) to pivot (about the axle 212) relative to the cycle portion (200). This allows the vehicle to easily traverse ramps, bumpy ground, etc.

Optionally, the rear axle (212), drive sprocket (236), pair of wheels (210a, 210b) and V-shaped brackets (224a, 224b) may be replaced by a single wheel with a hub and drive sprocket (not shown); said hub being rotationally mounted between a further pair of V-shaped brackets (that is the same as brackets 224); these brackets again being connected to the rear portion (220) of the cycle frame (222) by the inverted "U-shaped" member (226). This advantageously allows the tricycle to be readily converted to a bicycle; thus making it more suitable for recreational use.

While the rear wheel of the bicycle (10) will normally be removed in order to provide a tricycle (200) or a bicycle-trailer hybrid (200, 300) the vehicle of the present invention may be easily converted to become a static pedal-powered "motor" to drive domestic/agricultural equipment. Thus, if the coupling (224) of the tricycle (200) is removed from the rear-end thereof and this rear-end is supported on static stilts; the sprocket bush (56) of the rear sprocket (46) may be connected by a drive chain (not shown) to the drive shaft (not shown) of such domestic/agricultural equipment. This offers considerable advantages in Third-World countries where short term power is needed; for example, to drive pumps and grinders etc. It also, advantageously, allows considerably more power to be generated than from an adapted conventional bicycle owing to the use or two persons to provide pedal power.

## Claims

1. A vehicle comprising a frame, a front wheel and at least one rear wheel; and directly or indirectly attached to said frame, a front seat that faces forwards allowing a first rider to sit thereon and steer the vehicle as it moves forward; and a rear seat that faces backwards such that in normal use a second rider can sit on said rear seat in a generally back-to-back position relative to a said first rider; further comprising a rear rider crank assembly (42, 44) and a front rider crank assembly (36); and **characterised in that**: a wheel hub (52) and a connected rear sprocket (46), or sprocket bush (56) having a connected rear sprocket (62), are rotatably mounted around the crankshaft (42) of said rear crank assembly such that in use pedal power from a rear rider is first transmitted through the rear pedals (34) and rear crank assembly, via a cross-over drive chain (38), to said front rider crank assembly.

2. A vehicle according to Claim 1 wherein in use pedal power is transmitted from said front rider crank assembly to said rear sprocket (46, 62) by a single drive chain (40).

3. A vehicle according to Claim 1 or 2 wherein said wheel hub (52) or sprocket bush (56) are indirectly connected to said rear sprocket (46, 62) by a connecting sleeve (48, 58) attached to said rear sprocket (46, 62) and configured to engage the inside of the wheel hub (52) or sprocket bush (56).

4. A vehicle according to any preceding claim wherein the rear seat is located between the front wheel and the rear wheel and the rear seat further comprises a backrest/support a major portion of which is located at a level lower than the front seat.

5. A vehicle according to Claim 1 to 4 and a trailer (100, 300), wherein in use said trailer may be connected to the rear portion of said frame following detachment of a single rear wheel (10) or pair of rear wheels (210).

6. A vehicle and a trailer according to Claim 5 wherein in use, following detachment of said rear wheel(s), the rear of the vehicle may be directly or indirectly connected to the front of a trailer such that the vehicle may pivot relative to the trailer.

7. A vehicle and a trailer according to Claim 5 wherein in use, following detachment of said rear wheel(s), the rear of the vehicle may be directly or indirectly connected to the front of a trailer such that the vehicle may pivot about the longitudinal axis of said axle of the trailer.

8. A vehicle and a trailer according to any of Claims 5 to 7 wherein the trailer comprises a pair of front wheels located on a front axle and a pair of rear wheels mounted on a rear axle.

9. A vehicle and a trailer according to Claim 8 wherein the front and rear wheels on a first side of the trailer are connected by a continuous track and the front and rear wheels on the other side of the trailer are also connected by a continuous track.

10. A vehicle and a trailer according to Claim 6, said vehicle comprising wheel stays (22, 222), wherein in use the wheel stays of the vehicle are connected to the trailer via one or more connecting member(s) (118a, 118b).

11. A vehicle and a trailer according to Claim 10 wherein in use the connecting member(s) is pivotally mounted to the front axle of the trailer and locked to the vehicle wheel stays by a tubular member(s) (122) connected to a trailer handle.

12. A vehicle and a trailer to Claim 11 wherein the tubular member is "U-shaped" and its open ends engage an open tubular portion(s) of the connecting member and an open tubular portion(s) of a cycle wheel stay.

13. A vehicle and a trailer according to any of Claims 10 to 12 comprising two wheel stays pivotally mounted to the rear portion of vehicle frame so as to facilitate removal of the vehicle rear wheel prior to connecting a trailer.

14. A vehicle and a trailer according to any preceding claim wherein the vehicle frame has at least one pivotally mounted sidebar that in use the rear rider may hold.

15. A vehicle according to any preceding claim comprising a bicycle (10); a tricycle (200) or a bicycle-trailer hybrid (200, 300).

## Patentansprüche

1. Fahrzeug, das Folgendes umfasst: einen Rahmen, ein Vorderrad und mindestens ein Hinterrad; und wobei direkt oder indirekt an dem genannten Rahmen ein Vordersitz befestigt ist, der nach vorne weist, so dass ein erster Fahrer darauf sitzen und das Fahrzeug steuern kann, wenn es sich nach vorne bewegt; und einen Rücksitz, der nach hinten weist, so dass bei normalem Gebrauch ein zweiter Fahrer auf dem genannten Rücksitz in einer allgemeinen Rücken-zu-Rücken-Position im Verhältnis zu dem genannten ersten Fahrer sitzen kann; ferner umfassend eine Heckfahrerkurbelanordnung (42, 44) und eine Frontfahrerkurbelanordnung (36); und **dadurch gekennzeichnet, dass**: eine Radnabe (52) und ein verbundenes hinteres Kettenrad (46) oder eine Kettenradbuchse (56) mit einem verbundenen hinteren Kettenrad (62) um die Kurbelwelle (42) der genannten hinteren Kurbelanordnung drehbar gelagert sind, so dass bei Betrieb die Pedalleistung von einem Heckfahrer zuerst über die hinteren Pedale (34) und die hintere Kurbelanordnung über eine kreuzweise Antriebskette (38) zu der genannten Frontfahrerkurbelanordnung übertragen wird.

2. Fahrzeug nach Anspruch 1, wobei bei Betrieb die Pedalleistung von der genannten Frontfahrerkurbelanordnung zu dem genannten hinteren Kettenrad (46, 62) durch eine einzige Antriebskette (40) übertragen wird.

3. Fahrzeug nach Anspruch 1 oder 2, wobei die genannte Radnabe (52) oder die Kettenradbuchse (56) durch eine Verbindungshülse (48, 58) indirekt mit dem genannten hinteren Kettenrad (46, 62) verbunden ist, das an dem genannten hinteren Kettenrad (46, 62) befestigt ist und so konfiguriert ist, dass es in die Innenseite der Radnabe (52) oder der Kettenradbuchse (56) eingreift.

4. Fahrzeug nach einem der vorhergehenden Ansprüche wobei der Rücksitz zwischen dem Vorderrad und dem Hinterrad angeordnet ist und der Rücksitz ferner eine Rückenlehne/Stütze aufweist, deren Hauptteil sich auf einer Höhe befindet, die niedriger als der Vordersitz ist.

5. Fahrzeug nach Anspruch 1 bis 4 und Anhänger (100, 300), wobei bei Gebrauch der genannte Anhänger mit dem hinteren Teil des genannten Rahmens nach dem Lösen eines einzelnen Hinterrades (10) oder eines Paares von Hinterrädern (210) verbunden werden kann.

6. Fahrzeug und Anhänger nach Anspruch 5, wobei bei Gebrauch nach dem Ablösen des/der genannten Hinterrades/Hinterräder die Rückseite des Fahrzeugs direkt oder indirekt mit der Vorderseite eines Anhängers verbunden werden kann, so dass das Fahrzeug im Verhältnis zum Anhänger schwenken kann.

7. Fahrzeug und Anhänger nach Anspruch 5, wobei bei Gebrauch nach dem Ablösen des/der genannten Hinterrades/Hinterräder die Rückseite des Fahrzeugs direkt oder indirekt mit der Vorderseite eines Anhängers verbunden werden kann, so dass das Fahrzeug um die Längsachse der genannten Achse des Anhängers schwenken kann.

8. Fahrzeug und Anhänger nach einem der Ansprüche 5 bis 7, wobei der Anhänger ein Paar Vorderräder, die auf einer Vorderachse angeordnet sind, und ein Paar Hinterräder, die an einer Hinterachse angebracht sind, umfasst.

9. Fahrzeug und Anhänger nach Anspruch 8, wobei die Vorder- und Hinterräder auf einer ersten Seite des Anhängers durch ein durchgehendes Laufband verbunden sind und die Vorder- und Hinterräder auf der anderen Seite des Anhängers ebenfalls durch ein durchgehendes Laufband verbunden sind.

10. Fahrzeug und Anhänger nach Anspruch 6, wobei das genannte Fahrzeug Radstreben (22, 222) umfasst, wobei die Radstreben bei Betrieb des Fahrzeugs über ein oder mehrere Verbindungselemente (118a, 118b) mit dem Anhänger verbunden sind.

11. Fahrzeug und Anhänger nach Anspruch 10, wobei bei Gebrauch das oder die Verbindungselemente schwenkbar an der Vorderachse des Anhängers angebracht und an den Fahrzeugradstreben durch ein oder mehrere rohrförmige Elemente (122), die mit einem Anhängergriff verbunden sind, verriegelt sind.

12. Fahrzeug und Anhänger nach Anspruch 11, wobei das rohrförmige Element "U-förmig" ist und seine offenen Enden in einen oder mehrere offene rohrförmige Abschnitte des Verbindungselements und einen oder mehrere offene rohrförmige Abschnitte einer Fahrradstrebe eingreifen.

13. Fahrzeug und Anhänger nach einem der Ansprüche 10 bis 12 mit zwei Radstreben, die schwenkbar am hinteren Teil des Fahrzeugrahmens angebracht sind, um das Entfernen des Hinterrades vor dem Ankuppeln eines Anhängers zu erleichtern.

14. Fahrzeug und Anhänger nach einem der vorhergehenden Ansprüche, wobei der Fahrzeugrahmen mindestens eine schwenkbar gelagerte Seitenleiste aufweist, die der Heckfahrer bei Gebrauch halten kann.

15. Fahrzeug nach einem der vorhergehenden Ansprüche, das ein Fahrrad (10); ein Dreirad (200) oder einen Fahrrad-Anhänger-Hybriden (200, 300) umfasst.

## Revendications

1. Véhicule comprenant un châssis, une roue avant et au moins une roue arrière ; et directement ou indirectement fixé audit châssis, un siège avant orienté vers l'avant permettant à un premier passager de s'y asseoir et de conduire le véhicule lorsqu'il avance ; et un siège arrière orienté vers l'arrière de sorte que, lors d'une utilisation normale, un second passager puisse s'asseoir sur ledit siège arrière dans une position généralement dos à dos par rapport audit premier passager ; comprenant en outre un ensemble bielle de passager arrière (42, 44) et un ensemble bielle de passager avant (36) ; et **caractérisé en ce que** : un moyeu de roue (52) et un pignon arrière connecté (46), ou une bague de pignon (56) ayant un pignon arrière connecté (62), sont montés en rotation autour du vilebrequin (42) dudit ensemble bielle arrière, de sorte que, lors de l'utilisation, une puissance de pédale en provenance d'un passager arrière soit d'abord transmise par l'intermédiaire des pédales arrière (34) et l'ensemble bielle arrière, au moyen d'une chaîne de transmission croisée (38), à l'ensemble bielle de passager avant.

2. Véhicule selon la revendication 1, dans lequel, lors de l'utilisation, une puissance de pédale, est transmise dudit ensemble de bielle de passager avant audit pignon arrière (46, 62) par une unique chaîne de transmission (40).

3. Véhicule selon la revendication 1 ou 2, dans lequel ledit moyeu de roue (52), ou la bague de pignon (56), est indirectement connecté audit pignon arrière (46, 62) par un manchon de raccordement (48, 58) fixé audit pignon arrière (46, 62) et conçu pour venir au contact de l'intérieur du moyeu de roue (52) ou de la bague de pignon (56).

4. Véhicule selon l'une quelconque des revendications précédentes, dans lequel le siège arrière est situé entre la roue avant et la roue arrière, et le siège arrière comprend en outre un dossier/support dont la majeure partie est située à un niveau plus bas que le siège avant.

5. Véhicule selon les revendications 1 à 4 et remorque (100, 300), ladite remorque, lors de l'utilisation, pouvant être reliée à la partie arrière dudit châssis après la séparation d'une seule roue arrière (10) ou d'une paire de roues arrière (210).

6. Véhicule et remorque selon la revendication 5, l'arrière du véhicule, lors de l'utilisation, après la séparation de ladite ou desdites roues arrière, pouvant être directement ou indirectement connecté à l'avant d'une remorque de sorte que le véhicule puisse pivoter par rapport à la remorque.

7. Véhicule et remorque selon la revendication 5, l'arrière du véhicule, lors de l'utilisation, après la séparation de ladite ou desdites roues arrière, pouvant être directement ou indirectement connecté à l'avant d'une remorque de sorte que le véhicule puisse pivoter par rapport à l'axe longitudinal dudit essieu de la remorque.

8. Véhicule et remorque selon l'une quelconque des revendications 5 à 7, la remorque comprenant une paire de roues avant situées sur un essieu avant, et une paire de roues arrière montées sur un essieu arrière.

9. Véhicule et remorque selon la revendication 8, les roues avant et arrière d'un premier côté de la remorque étant reliées par une chenille continue, et les roues avant et arrière de l'autre côté de la remorque étant également reliées par une chenille continue.

10. Véhicule et remorque selon la revendication 6, ledit véhicule comprenant des étais de roue (22, 222), les étais de roue étant, lors de l'utilisation, reliés à la remorque par l'intermédiaire d'un ou plusieurs éléments de liaison (118a, 118b).

11. Véhicule et remorque selon la revendication 10, le ou les éléments de liaison étant, lors de l'utilisation, montés en pivot sur l'essieu avant de la remorque et verrouillés aux étais de roue de véhicule par un ou plusieurs éléments tubulaires reliés à une poignée de remorque.

12. Véhicule et remorque selon la revendication 11, l'élément tubulaire étant en forme de U et ses extrémités ouvertes recevant une ou plusieurs parties tubulaires de l'élément de liaison et une ou plusieurs parties tubulaires d'un étai de roue de cycle.

13. Véhicule et remorque selon l'une quelconque des revendications 10 à 12, comprenant deux étais de roue montés en pivot sur la partie arrière d'un châssis de véhicule afin de faciliter la séparation de la roue arrière avant l'attelage d'une remorque.

14. Véhicule et remorque selon l'une quelconque des revendications précédentes, le châssis de véhicule ayant au moins une barre latérale montée en pivot que peut saisir, lors de l'utilisation, le passager arrière.

15. Véhicule selon l'une quelconque des revendications précédentes, consistant en une bicyclette (10), un tricycle (200) ou un véhicule hybride bicyclette-remorque (200, 300).
